(19) **Europäisches Patentamt / European Patent Office / Office européen des brevets**

(11) **EP 1 583 870 B1**

(12) **FASCICULE DE BREVET EUROPEEN**

(45) Date de publication et mention
de la délivrance du brevet:
**16.12.2009 Bulletin 2009/51**

(51) Int Cl.:
***D21H 19/66*** (2006.01)    ***D21H 25/00*** (2006.01)
***C09D 5/00*** (2006.01)    ***B44F 1/14*** (2006.01)

(21) Numéro de dépôt: **03815119.7**

(22) Date de dépôt: **30.12.2003**

(86) Numéro de dépôt international:
**PCT/FR2003/003940**

(87) Numéro de publication internationale:
**WO 2004/063464 (29.07.2004 Gazette 2004/31)**

(54) **FEUILLE POSSEDANT UN ASPECT IRIDESCENT, ET SON PROCEDE DE FABRICATION**

FOLIE MIT IRIDISIERENDER OPTIK UND DEREN HERSTELLUNG

FOIL WITH IRIDESCENT APPEARANCE AND METHOD FOR THE PRODUCTION THEREOF

(84) Etats contractants désignés:
**AT BE BG CH CY CZ DE DK EE ES FI FR GB GR HU IE IT LI LU MC NL PT RO SE SI SK TR**

(30) Priorité: **03.01.2003 FR 0300030**

(43) Date de publication de la demande:
**12.10.2005 Bulletin 2005/41**

(73) Titulaire: **ARJO WIGGINS**
**92130 Issy Les Moulineaux (FR)**

(72) Inventeur: **LEJEUNE, Valérie**
**F-38000 Grenoble (FR)**

(74) Mandataire: **Desaix, Anne**
**Ernest Gutmann - Yves Plasseraud S.A.S.**
**3, rue Auber**
**75009 Paris (FR)**

(56) Documents cités:
**EP-A- 0 049 672    FR-A- 2 395 141**
**FR-A- 2 641 011    FR-A- 2 777 297**
**GB-A- 2 283 026    US-A- 3 835 087**
**US-A- 5 342 649**

**Description**

La présente invention concerne une feuille possédant un aspect iridescent obtenue par enduction de pigments iridescents sur un support et son procédé de fabrication.

On connaît déjà des papiers possédant un aspect iridescent.

Ces derniers présentent des couleurs ou des reflets changeants en fonction de l'angle d'inclinaison de la feuille par rapport à l'observateur, en particulier un effet nacré.

Ces effets optiques sont obtenus par l'incorporation dans le papier de pigments iridescents en choisissant le type et la quantité de pigments utilisés en fonction de l'effet désiré.

Ces pigments iridescents sont utilisés soit dans un but d'authentification, pour un papier de sécurité par exemple, soit dans un but décoratif, pour un papier impression-écriture par exemple.

Ils peuvent être introduits en masse, par mélange avec la pâte à papier avant la formation de la feuille, ou par dépôt en surface, mélangés à une enduction déposée sur la surface du papier.

La demanderesse s'est intéressée plus particulièrement à ce dernier mode d'application.

L'application de pigments iridescents en surface pose actuellement divers problèmes.

D'une part, l'application de substances iridescentes en surface peut générer des surépaisseurs ou des irrégularités de surface indésirables compte-tenu de leur taille.

Le papier revêtu de cette couche iridescente ne présente plus le même lissé de surface, ou la même imprimabilité que le support de base.

Ce phénomène peut s'avérer incompatible avec les besoins fondamentaux du produit, notamment dans des applications où les couches de surface jouent un rôle non négligeable.

D'autre part, l'application d'une couche iridescente peut modifier la transparence du support, en particulier dans les zones à forte concentration de substances.

Ceci peut s'avérer particulièrement gênant pour un papier calque pour lequel on veut conserver les caractéristiques de transparence.

Un autre inconvénient des méthodes actuelles d'obtention est le coût des pigments utilisés.

Parmi les pigments iridescents fréquemment utilisés, on trouve notamment les extraits de nacre, les sels de plomb et les pigments de mica-titane.

Les pigments reconnus pour leur plus grand pouvoir iridescent, tel que les pigments de mica-titane, sont également parmi les plus onéreux.

De plus, les modes d'incorporation des pigments iridescents dans le papier ne favorisent pas une utilisation modérée et raisonnable de ceux-ci.

En effet, mélangés au liant de l'enduction, les pigments peuvent être en partie ou totalement recouverts d'une couche non transparente, ce qui a pour effet d'occulter l'effet optique desdits pigments.

Par conséquent, ce sont principalement les pigments les plus en surface qui modifient l'effet optique du papier au final.

Seule une surconsommation de pigments permet donc de garantir un effet iridescent suffisamment intense, nécessaire à une reconnaissance facile et rapide du support ainsi enduit.

Un autre inconvénient des formulations de couche iridescente actuelle est la perte, parfois importante, de brillance du support ainsi enduit.

Le choix du liant est dans ce cas particulièrement important, si l'on désire un papier possédant une brillance accrue.

En effet, le liant peut, selon le cas, accroître la brillance d'un support de base mat ou aboutir à une perte significative de brillance pour le papier au final.

Or, dans les domaines d'activité visés par la Demanderesse, en particulier celui des papiers impression-écriture et des papiers de luxe, une meilleure brillance de papier est souvent appréciée.

De la même façon, une meilleure brillance d'encre après l'impression du support enduit est également souhaitable.

Afin de résoudre les défauts décrits ci-dessus, la présente invention a pour but de proposer un nouveau procédé de fabrication d'une feuille possédant un aspect iridescent, dans lequel les autres caractéristiques du support de base, telles que la transparence, l'imprimabilité ou la brillance restent inchangées avec la couche, voire peuvent être améliorées.

Un autre but de l'invention est de fournir un nouveau procédé de fabrication d'une feuille possédant un aspect iridescent suffisamment prononcé, et qui ne nécessite pas une quantité minimale trop importante de pigments iridescents.

La présente invention consiste donc en une feuille possédant un aspect iridescent **caractérisée en ce qu'**elle comprend, en surface, une couche formée à partir de pigments iridescents en mélange avec des mierosphères creuses plastiques.

Selon un mode préféré de l'invention, les pigments iridescents sont du type mica-titane.

**[0030]** - Selon un autre mode préféré de l'invention, les microsphères creuses plastiques sont à base de polymère styrène-acrylique.

Selon un mode particulier de l'invention, le diamètre moyen des microsphères compris entre 0,5 μm et 1,0 μm, et est de préférence égale à 0,6 μm.

Selon un mode préféré de l'invention, la feuille est calandrée et sa brillance est supérieure ou égale à 65, telle que mesurée par un brillancemètre Byk Gardner orienté à 75° par rapport à la normale.

Selon un mode particulier de l'invention, la feuille est transparente ou translucide et définit, notamment, un papier calque naturel.

L'invention consiste également en un procédé de fabrication d'une feuille possédant un aspect iridescent **caractérisé en ce que** :

- on enduit un support d'une couche constituée d'un mélange de pigments iridescents et d'une dispersion aqueuse de microsphères creuses plastiques à l'aide d'un dispositif d'enduction,
- on sèche l'enduit,
- on calandre la feuille ainsi obtenue.

Selon un mode préféré de l'invention, le support est un matériau à base de fibres cellulosiques.

Selon un mode particulier de l'invention, le support est un matériau plastique.

Selon un mode de réalisation de l'invention, le dispositif d'enduction est une coucheuse à lame métallique.

Selon un autre mode de réalisation de l'invention, le dispositif d'enduction est une coucheuse à rideau.

Selon un mode de réalisation, on utilise une calandre acier, la feuille étant calandrée plusieurs fois, en particulier entre 3 et 5 fois, sous une pression de 80 N/m².

Selon un autre mode de réalisation, on utilise une calandre dite « cotton », la calandre « cotton » étant une calandre classique alternant rouleaux métalliques et rouleaux élastiques, dans laquelle les rouleaux métalliques ont été revêtus d'un papier cellulosique ou d'un carton de manière à atténuer l'effet de compression sur le papier.

Selon un mode préféré de réalisation de l'invention, les paramètres de calandrage sont définis de manière à ce que la transparence de la couche après calandrage soit au moins deux fois supérieure à celle de la couche avant calandrage, la transparence étant définie par la formule :

$$\text{TRANSPARENCE} = 100 - \text{OPACITE},$$

l'opacité étant évaluée d'après la norme NF Q 03 006.

Selon un autre mode préféré de réalisation de l'invention, les paramètres de calandrage sont définis de manière à ce que la brillance de la feuille après calandrage, mesurée à l'aide d'un brillancemètre Byk Gardner orienté à 75° par rapport à la normale, soit au moins deux fois supérieure à celle de la feuille avant calandrage.

L'invention sera mieux comprise à l'aide des exemples qui vont suivre.

Exemple 1 comparatif :

On dépose à l'aide d'une coucheuse à lame métallique sur une des faces d'un papier précouché, possédant un grammage d'environ 100 g/m² et vendu sous la référence commerciale MAINE CLUB SATIMAT par la société ARJO WIGGINS PAPIERS COUCHES, une couche iridescente à raison de 5 g/m².

La composition de couche iridescente utilisée est la suivante :

- 20 % en poids sec de pigment iridescent du type mica enrobé de titane vendu sous la référence SUPERGOLD par la société Engelhard
- 80 % en poids sec d'un liant polymère styrène-acrylique.

Exemple 2 comparatif :

On dépose à l'aide d'une coucheuse à lame métallique sur une des faces d'un film plastique transparent du type MYLAR possédant un grammage d'environ 90 g/m² une couche iridescente à raison de 5 g/m².

La composition de couche iridescente utilisée est celle de l'exemple 1.

Exemple 3 :

On dépose à l'aide d'une coucheuse à lame métallique sur une des faces du papier de l'exemple 1 une couche iridescente à raison de 5 g/m$^2$.

La composition de couche iridescente utilisée est la suivante :

- 20 % en poids sec de pigment iridescent du type mica enrobé de titane vendu sous la référence SUPERGOLD par la société Engelhard,
- 80 % en poids sec d'une dispersion aqueuse de microsphères creuses d'un copolymère styrène-acrylique possédant une taille d'environ 0,6 $\mu$m et vendu sous la référence RHOPAQUE 643 BC par la société Rohm et Hass.

Exemple 4 :

On dépose à l'aide d'une coucheuse à lame métallique sur une des faces d'un film MYLAR possédant un grammage d'environ 90 g/m$^2$ une couche iridescente à raison de 5 g/m$^2$.

La composition de couche iridescente utilisée est celle de l'exemple 3.

Exemple 5 :

On dépose à l'aide d'une coucheuse à lame métallique sur une des faces du papier précouché de l'exemple 1 une couche iridescente à raison de 5 g/m$^2$.

La composition de couche iridescente utilisée est la suivante :

- 20 % en poids sec de pigment iridescent du type mica enrobé de titane vendu sous la référence SUPERGOLD par la société Engelhard,
- 63 % en poids sec d'une dispersion aqueuse de microsphères creuses d'un copolymère styrène acrylique possédant une taille d'environ 0,6 $\mu$m et vendues sous la référence RHOPAQUE 643 BC par la société Rohm et Hass,
- 17 % en poids sec d'un liant polyvinyle-acrylique

Exemple 6 :

On dépose à l'aide d'une coucheuse à lame métallique sur une des faces d'un film MYLAR possédant un grammage d'environ 90 g/m$^2$ une couche iridescente à raison de 5 g/m$^2$.

La composition de couche iridescente utilisée est celle de l'exemple 5.

Tous les papiers ou films recouverts de leur couche respective des exemples précédents sont ensuite calandrés, en les faisant passer dans une calandre à cylindres en acier, qui exerce une pression de 8.0 N/m$^2$ sur le papier durant trois passages, les cylindres n'étant pas chauffés par voie externe.

On effectue ensuite une série de tests permettant de mettre en évidence l'amélioration de la transparence de la couche et de la brillance du papier couché après calandrage.

Test de transparence :

On mesure d'abord, avant calandrage, l'opacité sur fond blanc du complexe formé par le film MYLAR recouvert de la couche dans les exemples 2, 4 et 6, cette opacité étant évaluée en appliquant la norme NF Q 03-006.

On en déduit la transparence du complexe en appliquant la formule

$$\text{TRANSPARENCE} = 100 - \text{OPACITE}$$

On mesure à nouveau l'opacité sur fond blanc du complexe après calandrage et on en déduit la transparence comme ci-dessus.

En considérant que la transparence du support MYLAR seul ne se modifie que de façon négligeable lors du calandrage, on en déduit le gain en transparence de la couche après calandrage en soustrayant la seconde valeur de transparence à la première.

Test de brillance :

On mesure la brillance du papier couché avant et après calandrage pour les exemples 1, 3 et 5 en utilisant un brillancemètre Byk Gardner orienté à 75° par rapport à la normale.

On évalue ensuite le gain en brillance pour le papier couché.

|  | Transparence Complexe Avant calandrage | Transparence Complexe Après calandrage | Gain relatif en transparence pour la couche | Brillance papier avant calandrage | Brillance papier après calandrage | Gain relatif en brillance pour le papier |
|---|---|---|---|---|---|---|
| **Ex 1** |  |  |  | 35,5 | 61,3 | 72,7 % |
| **Ex 2** | 78,0 | 78,9 | 1,1 % |  |  |  |
| **Ex 3** |  |  |  | 34,3 | 72,7 | 112,0 % |
| **Ex 4** | 22,8 | 65,4 | 186,8 % |  |  |  |
| **Ex 5** |  |  |  | 26,6 | 77,7 | 192,1 % |
| **Ex 6** | 28,0 | 57,7 | 106 % |  |  |  |

On constate donc que la présence de microsphères creuses plastiques améliore sensiblement le gain en transparence et en brillance après calandrage par rapport à une couche iridescente utilisant un liant classique de type latex acrylique.

Ce gain relatif est supérieur à 100 % que ce soit pour la transparence de la couche et pour la brillance du papier couché.

Ceci peut résulter de l'effet d'aplatissement exercé par les presses de calandrage sur les microsphères plastiques, ce qui confère une meilleure transparence de surface à la couche.

## Revendications

1. Feuille possédant un aspect iridescent **caractérisée en ce qu'**elle comprend, en surface, une couche formée de pigments iridescents en mélange avec des microsphères creuses plastiques.

2. Feuille selon la revendication 1, **caractérisée en ce que** les pigments iridescents sont du type mica-titane.

3. Feuille selon la revendication 1 ou 2, **caractérisée en ce que** les microsphères creuses plastiques sont à base de polymère styrène-acrylique.

4. Feuille selon l'une des revendications précédentes, **caractérisée en ce que** le diamètre moyen des microsphères est compris entre 0,5 $\mu$m et 1,0 $\mu$m, et est, de préférence, égal à environ 0,6 $\mu$m.

5. Feuille selon l'une des revendications précédentes, **caractérisée en ce qu'**elle est calandrée et sa brillance est supérieure ou égale à 65, telle que mesurée par un brillancemètre Byk Gardner orienté à 75° par rapport à la normale.

6. Feuille selon l'une des revendications précédentes, **caractérisée en ce qu'**elle est transparente ou translucide et définit, notamment, un papier calque naturel.

7. Procédé de fabrication d'une feuille possédant un aspect iridescent, **caractérisé en ce que** :

   - on enduit un support d'une couche constituée d'un mélange de pigments iridescents et d'une dispersion aqueuse de microsphères creuses plastiques à l'aide d'un dispositif d'enduction,
   - on sèche l'enduit,
   - on calandre la feuille ainsi obtenue.

8. Procédé de fabrication selon la revendication 7, **caractérisé en ce que** ledit support est un matériau à base de fibres cellulosiques.

9. Procédé de fabrication selon la revendication 7, **caractérisé en ce que** ledit support est un matériau plastique.

10. Procédé de fabrication selon l'une des revendications 7 à 9, **caractérisé en ce que** le dispositif d'enduction est une coucheuse à lame métallique.

**11.** Procédé de fabrication selon l'une des revendications 7 à 9, **caractérisé en ce que** le dispositif d'enduction est une coucheuse à rideau.

**12.** Procédé de fabrication selon l'une des revendications 7 à 11, **caractérisé en ce qu'**on utilise une calandre acier, la feuille étant calandrée plusieurs fois, en particulier entre 3 et 5 fois, sous une pression de 80 N/m$^2$.

**13.** Procédé de fabrication selon l'une des revendications 7 à 11, **caractérisé en ce qu'**on utilise une calandre dite « cotton ».

**14.** Procédé de fabrication selon l'une des revendications 7 à 13, **caractérisé en ce que** les paramètres de calandrage sont définis de manière à ce que la transparence de la couche après calandrage soit au moins deux fois supérieure à celle de la couche avant calandrage, la transparence étant définie par la formule :

$$\text{TRANSPARENCE} = 100 - \text{OPACITE},$$

l'opacité étant évaluée d'après la norme NF-Q 03 006.

**15.** Procédé de fabrication selon l'une des revendications 7 à 14, **caractérisé en ce que** les paramètres de calandrage sont définis de manière à ce que la brillance de la feuille après calandrage, mesurée à l'aide d'un brillancemètre Byk Gardner orienté à 75° par rapport à la normale, soit au moins deux fois supérieure à celle de la feuille avant calandrage.

**Claims**

**1.** Foil with an iridescent appearance, **characterised in that** on its surface it has a layer formed from iridescent pigments mixed with hollow plastic microspheres.

**2.** Foil according to claim 1, **characterised in that** the iridescent pigments are of mica-titanium.

**3.** Foil according to claim 1 or 2, **characterised in that** the hollow plastic microspheres are styrene-acrylic polymer-based.

**4.** Foil according to one of the preceding claims, **characterised in that** the average diameter of the microspheres lies between 0.5 $\mu$m and 1.0 $\mu$m and is preferably approximately 0.6 $\mu$m.

**5.** Foil according to one of the preceding claims, **characterised in that** it is calendered and its gloss is higher than or equal to 65, as measured by a Byk Gardner gloss meter oriented at 75° relative to the normal.

**6.** Foil according to one of the preceding claims, **characterised in that** it is transparent or translucent and characterises in particular a natural tracing paper.

**7.** Method for the production of a foil with an iridescent appearance, **characterised in that**

- a support is coated with a layer composed of a mixture of iridescent pigments and an aqueous dispersion of hollow plastic microspheres using a coating device,
- the coating is dried,
- the foil thus obtained is calendered.

**8.** Production method according to claim 7, **characterised in that** said support is a cellulose fibre-based material.

**9.** Production method according to claim 7, **characterised in that** said support is a plastic material.

**10.** Production method according to one of claims 7 to 9, **characterised in that** the coating device is a metal blade coater.

**11.** Production method according to one of claims 7 to 9, **characterised in that** the coating device is a curtain coater.

**12.** Production method according to one of claims 7 to 11, **characterised in that** a steel calender is used and the foil is calendered several times, in particular between 3 and 5 times, at a pressure of 80 N/m$^2$.

**13.** Production method according to one of claims 7 to 11, **characterised in that** a so-called cotton calender is used.

**14.** Production method according to one of claims 7 to 13, **characterised in that** the calendering parameters are defined such that the transparency of the coating after calendering is at least twice as high as that of the coating before calendering, wherein transparency is defined by the formula:

$$TRANSPARENCY = 100 - OPACITY,$$

wherein opacity is evaluated in accordance with French standard NF-Q 03 006.

**15.** Production method according to one of claims 7 to 14, **characterised in that** the calendering parameters are defined such that the gloss of the foil after calendering, measured using a Byk Gardner gloss meter oriented at 75° relative to the normal, is at least twice as high as that of the foil before calendering.

**Patentansprüche**

**1.** Blatt mit einem irisierenden Aussehen, **dadurch gekennzeichnet dass** es auf der Oberfläche eine Schicht umfasst, welche aus irisierenden Pigmenten in Mischung mit hohlen Mikrokugeln aus Kunststoff gebildet ist.

**2.** Blatt nach Anspruch 1, **dadurch gekennzeichnet dass** die irisierenden Pigmente vom Typ Glimmer-Titan sind.

**3.** Blatt nach Anspruch 1 oder 2, **dadurch gekennzeichnet dass** die hohlen Mikrokugeln aus Kunststoff auf einem Styrol-Acryl-Polymer basieren.

**4.** Blatt nach einem der vorstehenden Anspruche, **dadurch gekennzeichnet dass** der mittlere Durchmesser der Mikrokugeln zwischen 0,5 $\mu$m und 1,0$\mu$m beträgt, und vorzugsweise gleich ungefähr 0,6$\mu$m.

**5.** Blatt nach einem der vorstehenden Ansprüche, **dadurch gekennzeichnet dass** es kalandriert ist und sein Glanz höher als oder gleich 65 ist, wie mit einem Byk Gardner Glanzmessgerät mit einer Ausrichtung von 75° gegenüber der Normalen bestimmt.

**6.** Blatt nach einem der vorstehenden Ansprüche, **dadurch gekennzeichnet dass** es transparent oder transluzent ist und insbesondere ein natürliches Transparent-Zeichenpapier festlegt.

**7.** Verfahren zur Herstellung eines Blatts mit einem irisierenden Aussehen, **dadurch gekennzeichnet dass:**

- ein Träger mit einer Schicht unfassend eine Mischung irisierender Pigmente und einer wässrigen Dispersion von hohlen Mikrokugeln aus Kunststoff unter Verwendung einer Beschichtungsvorrichtung beschichtet wird,
- die Beschitung getrocknet wird,
- das dadurch erhaltene Blatt kalandriert wird

**8.** Herstellungsverfahren nach Anspruch 7, **dadurch gekennzeichnet dass** der Träger aus einem Material auf Grundlage von Cellulosefasern besteht.

**9.** Herstellungsverfahren nach Anspruch 7, **dadurch gekennzeichnet dass** der Träger aus einem Kunststottinaterial besteht.

**10.** Herstellungsverfahren nach einem der Ansprüche 7-9, **dadurch gekennzeichnet dass** die Beschichtungsvorrichtung eine Metall-Rakelstreichanlage ist.

**11.** Herstellungsverfahren nach einem der Ansprüche 7-9, **dadurch gekennzeichnet dass** die Beschichtungsvorrichtung eine Florstreichmaschine ist.

**12.** Herstellungsverfahren nach einem der Ansprüche 7-11, **dadurch gekennzeichnet dass** ein Stahl-Kalander verwendet wird, das Blatt mehrfach kalandriert wird, insbesondere zwischen 3 und 5 mal, unter einem Druck von 80N/m$^2$.

**13.** Herstellungsverfahren nach einem der Ansprüche 7-11, **dadurch gekennzeichnet dass** ein "Cotton" Kalander verwendet wird.

**14.** Herstellungsverfahren nach einem der Ansprüche 7-13, **dadurch gekennzeichnet dass** die Kalanderparameter derart festgelegt sind, dass die Transparenz der Schicht nach einem Kalandrieren mindestens zweimal höher ist als jene der Schicht vor einem Kalandrieren, wobei die Transparent durch die Formel:

$$\text{Transparenz} = 100 - \text{Opazität,}$$

festgelegt wird, wobei die Opazität nach der Norm NF-Q 03 006 bestimmt wird.

**15.** Herstellungsverfahren nach einem der Ansprüche 7-14, **dadurch gekennzeichnet dass** die Kalanderparameter derart festgelegt sind, dass der Glanz des Blatts nach einem Kalandrieren, welcher mit einem Byk Gardner Glanzmessgerät mit einer Ausrichtung von 75° gegenüber der Normalen bestimmt wird, mindestens zweimal höher ist als jene des Blatts vor einem Kalandrieren.